# EUROPÄISCHE PATENTSCHRIFT

(11) **EP 4 257 544 B1**
(45) Veröffentlichungstag und Bekanntmachung des Hinweises auf die Patenterteilung: **12.03.2025**
(21) Anmeldenummer: 23000050.7
(22) Anmeldetag: 28.03.2023
(51) Int. Cl.: C01B 3/34, C01B 13/02, B01J 19/08

(54) **VORRICHTUNG UND VERFAHREN ZUR HERSTELLUNG EINES ALKOHOL-SYNTHESEGASES**
APPARATUS AND METHOD FOR PRODUCING ALCOHOL SYNTHESIS GAS
DISPOSITIF ET PROCÉDÉ DE PRODUCTION D'UN GAZ DE SYNTHÈSE D'ALCOOL

(30) Priorität: 04.04.2022 DE 102022001148
(43) Veröffentlichungstag der Anmeldung: 11.10.2023
(73) Patentinhaber: EurA AG, 73479 Ellwangen (DE)
(72) Erfinder: Kliemke, Hardy, 73479 Ellwangen (DE); Schmidt, Dirk, 98529 Suhl (DE)
(74) Vertreter: Weihrauch, Frank

(56) Entgegenhaltungen:
- JP-A- 2003 062 579
- US-A1- 2006 060 464

## Beschreibung

Die Erfindung betrifft eine Vorrichtung zur Herstellung eines Alkohol-Synthesegases, insbesondere eines Methanol-Synthesegases. Ferner betrifft die Erfindung ein Verfahren zur Herstellung eines solchen Synthesegases.

Aus dem Stand der Technik ist die Erzeugung von Methanol aus einem Methanol-Synthesegas bekannt. Das Methanol-Synthesegas weist als wesentliche Bestandteile insbesondere Wasserstoff und Kohlenstoffmonoxid auf. Ferner sind in dem Stand der Technik verschiedene Lösungen zur Bereitstellung eines Methanol-Synthesegases beschrieben. Hierbei ist es bekannt, ein Methanol-Synthesegas aus Biomasse oder einem anderen Organiksubstrat zu gewinnen.

DE 10 2006 012 313 A1 beschreibt eine Lösung, bei der mit einem Sauerstoffionenleiter Kohlenstoffdioxid zu Kohlenstoffmonoxid und Wasser zu Wasserstoff unter Abtrennung von Sauerstoff reduziert wird. Nachteilig ist hierbei die geringe Bandbreite der Ausgangsstoffe.

Ferner wird durch DE 10 2012 010 542 A1 ein Verfahren und eine Vorrichtung zur Erzeugung von Synthesegas angegeben. Nachteilig ist hierbei der vergleichsweise aufwändige Aufbau.

Aufgabe der Erfindung ist es, unter Überwindung der Nachteile des Standes der Technik eine Vorrichtung und ein Verfahren zur effizienten, betriebssicheren und kostengünstigen Herstellung eines Alkohol-Synthesegases anzugeben.

Die Aufgabe wird in Bezug auf die Vorrichtung durch die im Patentanspruch 1 aufgeführten Merkmale und in Bezug auf das Verfahren durch die im Patentanspruch 6 aufgeführten Merkmale gelöst. Bevorzugte Weiterbildungen ergeben sich aus den jeweiligen Unteransprüchen.

Der erfindungsgemäßen Vorrichtung liegt Folgendes zu Grunde:
Als Alkohol-Synthesegas wird ein Gasgemisch verstanden, das durch eine genau eingestellte atomare Zusammensetzung, insbesondere in einem bestimmten zahlenmäßigen Verhältnis der Kohlenstoff-, Wasserstoff- und Sauerstoffatome zueinander, gekennzeichnet ist, nachfolgend auch bezeichnet als C:H:O-Verhältnis. Das C:H:O-Verhältnis ergibt sich aus der chemischen Summenformel des zu erzeugenden Alkohols und bezieht sich auf die Summe aller C-, aller H- und aller O-Atome in der Summenformel. Beispielsweise beträgt das C:H:O-Verhältnis für Methanol (CH3OH beziehungsweise CH4O) gleich 1:4:1, für Ethanol (C2H5OH beziehungsweise C2H6O) gleich 2:6:1. Da insbesondere das C:H:O Verhältnis des Organiksubstrats natürlichen Schwankungen unterliegen kann, die nicht immer genau ausgeglichen werden können, liegt auch das C:H:O Verhältnis in einem gewissen Toleranzkorridor. Eine Toleranz von jeweils ca. 5 Prozent bezogen auf die Anzahl der H-Atome und der O-Atome ist als erfindungsgemäß zu betrachten. Für beispielsweise ein Alkohol-Synthesegas für Methanol gilt ein C:H:O Verhältnis im Korridor 1 zu 3,8 bis 4,2 zu 0,95 bis 1,05 als erfindungsgemäß. Das Alkohol-Synthesegas kann stets in Mischung mit einem Wasserdampfstrom vorliegen, wobei dieser überlagerte Wasserdampfstrom nicht mit in die Berechnung des C:H:O Verhältnisses eingeht. Als überlagerter Wasserdampfstrom zu verstehen ist hier insbesondere Wasser, das nach der Alkoholsynthese neben dem Alkohol synthetisiert worden ist.

Das Alkohol-Synthesegas dient dabei insbesondere zur Erzeugung eines Alkohols mittels weiterer Reaktion. Bei dem Alkohol kann es sich insbesondere um Methanol, nachfolgend auch CH3OH, handeln, ohne hierauf beschränkt zu sein.

Das Alkohol-Synthesegas wird nachfolgend auch verkürzt als Synthesegas bezeichnet.

Das Synthesegas kann als Bestandteile Wasserstoff, nachfolgend auch H2 und Kohlenstoffmonoxid, nachfolgend auch CO sowie auch die weiteren Bestandteile insbesondere Sauerstoff, nachfolgend auch O2, Kohlenstoffdioxid, nachfolgend auch CO2 und Wasser, nachfolgend auch H2O, sowie Methan, nachfolgend auch CH4, aufweisen.

Als Synthesegas-Zwischenprodukt wird ein Gasgemisch verstanden, das Synthesegas sowie zusätzlich einen hohen Anteil an O2 aufweist, wobei als hoher Anteil an O2 ein zahlenmäßig höheres Verhältnis an Sauerstoffatomen gegenüber den Kohlenstoff- oder Wasserstoffatomen verstanden wird als für die Alkoholsynthese vorteilhaft ist und die für das Alkohol-Synthesegas oben definierte Toleranz bezogen auf den O-Anteil überschreitet. Beispielhaft für die Erzeugung eines Methanol Synthesegases ist ein Sauerstoffanteil dann als hoch anzusehen, wenn das C:H:O-Verhältnis einen O-Anteil aufweist der mehr als 5 Prozent höher liegt als es stöchiometrisch für die Synthese des Methanols erforderlich ist.

Der erfindungsgemäße Alkohol-Synthesegas-Reaktor weist als Grundkomponenten ein Reaktorbehältnis, einen Plasmaerzeuger sowie einen Sauerstoffseparator auf.

Das Reaktorbehältnis ist erfindungsgemäß als Blasensäulenreaktor ausgebildet und weist eine Organiksubstrat-Wasser-Zuleitung, einen Reaktionsraum, eine Begasungsvorrichtung sowie eine Entnahmeleitung auf.

Mittels der Organiksubstrat-Wasser-Zuleitung wird bestimmungsgemäß ein Organiksubstrat sowie Wasser, vorzugsweise in Form einer Organiksubstrat-Wasser-Suspension zu- und in den Reaktionsraum eingeleitet.

Als Organiksubstrat wird vorliegend ein Stoffgemisch verstanden, das aus unterschiedlichsten Verbindungen bestehen kann, die im Wesentlichen aber aus Molekülen der organischen Chemie bestehen. Als im Wesentlichen bestehend wird im Sinne der vorliegenden Erfindung verstanden, dass mehr als 90 Prozent aller im Organiksubstrat befindlichen Atome entweder Kohlenstoff, Wasserstoff oder Sauerstoff sind. Beispielsweise kann es sich bei dem Organiksubstrat um Biomasse handeln, wie sie bei der Zerkleinerung von Holz oder Kunststoffverpackungen anfällt. Es kann sich auch um folgende Stoffe handeln: biogene Abfälle, Klärschlämmen aus Kläranlagen, Gärreste einer Biogasanlage, kleingeschredderter Verpackungs- und Hausmüll, Schwarzwasser, tierische oder menschliche Fäkalien oder mit Medikamenten oder Chemikalien der organischen Chemie verunreinigte Abfälle. Die Organiksubstrat-Wasser-Zuleitung wird nachfolgend auch verkürzt als Zuleitung bezeichnet.

Der Reaktionsraum ist ausgebildet, die Organiksubstrat-Wasser-Suspension aufzunehmen, die bereits fertig über die Zuleitung eingebracht oder im Reaktionsraum aus dem Organiksubstrat und dem Wasser erzeugt werden kann.

Die Begasungsvorrichtung ist ausgebildet zur Zuführung eines Prozessgases in den Reaktionsraum. Vorzugsweise weist die Begasungsvorrichtung für die Zuführung des Prozessgases zumindest teilweise in einem unteren Bereich des Reaktionsraums eine Vielzahl kleiner Austrittsdüsen auf. Hierdurch ist die Begasungsvorrichtung für eine disperse Verteilung des Prozessgases ausgebildet.

Als Prozessgas im Sinne der vorliegenden Erfindung wird verstanden ein dampf- oder gasförmiges Fluid, das zur Anpassung des Kohlenstoff zu Wasserstoffverhältnisses (nachfolgend auch C:H-Verhältnis) des Alkohol-Synthesegases gezielt hinzugegeben wird und ein anderes C:H-Verhältnis als das Organik-Substrat aufweist. Es kann sich insbesondere auch um folgende Stoffe handeln: H2, H2O, CH4, CO2 oder CO sowie um Mischungen aus diesen.

Die Begasungsvorrichtung ist damit mittels der Anordnung von Austrittsdüsen für die Erzeugung einer Blasensäule in dem Reaktionsraum ausgebildet. Die Blasensäule stellt zugleich eine Feinverteilung des Prozessgases in der Organiksubstrat-Wasser-Suspension bereit und erzeugt so eine 3-Phasen-Dispersion aus dem Organiksubstrat als fester Phase, aus dem Wasser als flüssiger Phase und dem Prozessgas als gasförmiger Phase. Die Blasensäule bewirkt eine fortgesetzte Feinverteilung aller drei Phasen. Die Blasensäule beginnt in vertikaler Betrachtung unten bei dem Eintritt des Prozessgases mittels der Begasungsvorrichtung und endet oben an der äußeren Oberfläche der 3-Phasen-Dispersion.

Die Entnahmeleitung des Reaktors ist vorzugsweise in einem oberen Abschnitt des Reaktionsraums angeordnet und für eine Entnahme des Synthesegases oder eines Synthesegas-Zwischenprodukts ausgebildet.

Als weitere Grundkomponente weist die erfindungsgemäße Vorrichtung den Plasmaerzeuger auf. Dieser ist in der Blasensäule angeordnet und weist Anoden und Kathoden auf, die zusammengefasst als die Plasmaelektroden bezeichnet werden. Der Plasmaerzeuger ist ausgebildet zur Erzeugung eines Plasmas unter Entstehung des Synthesegas-Zwischenprodukts. Der Plasmaerzeuger kann insbesondere am Fuß der Blasensäule oder dezentral verteilt in der Blasensäule angeordnet sein.

Als Plasma wird ein Zustand verstanden, den ein Teil des Prozessgases oder des Synthesegas-Zwischenproduktes einnimmt, nachdem dieses durch ein elektrisches Feld geführt worden ist und elektrische Leistung eingekoppelt worden ist. Das Plasma ist durch die eingekoppelte elektrische Leistung selbst derart energiereich, dass durch dieses im Organik-Wasser-Substrat befindliche Molekülverbindungen aufgelöst (dissoziiert) werden können.

Zudem weist die erfindungsgemäße Vorrichtung als weitere Grundkomponente den Sauerstoffseparator auf. Der Sauerstoffseparator ist ausgebildet, Sauerstoff aus dem Synthesegas-Zwischenprodukt abzutrennen und so das Synthesegas zu erhalten.

Der Sauerstoffseparator kann vorzugsweise in dem Reaktionsraum angeordnet sein und so entstehungsnah den Sauerstoff abtrennen. In diesem Fall wird mittels der Entnahmeleitung das Synthesegas entnommen. Von der erfindungsgemäßen Lösung umfasst ist aber auch eine Anordnung außerhalb des Reaktionsbehältnisses, wobei in diesem Fall das Synthesegas-Zwischenprodukt über die Entnahmeleitung abgezogen und dem Sauerstoffseparator zugeleitet wird.

Mittels des Sauerstoffseparators wird verhindert, dass der durch den Plasmaerzeuger aus dem Organiksubstrat abgetrennte Sauerstoff unerwünscht wieder Verbindungen beispielsweise mit CO zu CO2 oder mit H2 zu H2O eingeht.

Der Sauerstoffseparator kann vorzugsweise insbesondere als ein Keramikseparator, auch als SOEC (Solid Oxide Electrolyzer Cell)- oder SOFC (Solid Oxide Fuel Cell)-Separator, ausgebildet sein.

Die erfindungsgemäße Vorrichtung weist insbesondere nachfolgende Vorteile auf. Es wurde eine technisch einfache und besonders störunanfällige Lösung gefunden ein Synthesegas zu erzeugen, indem mittels einer Blasensäule eine 3-Phasen-Dispersion erzeugt und ein Plasmaerzeuger in der Blasensäule angeordnet ist. Hierbei wurde überraschend gefunden, dass mittels der großen inneren Oberfläche an den Grenzschichten der gasförmigen Phase die Plasmabildung besonders effizient durchführbar ist.

Der gasförmige Anteil des Plasmas wird von der Blasensäule mitgerissen und in die 3-Phasen-Dispersion eingeleitet. In der 3-Phasen-Dispersion ändert sich entlang der vertikalen Erstreckung somit die Zusammensetzung der gasförmigen Phase, in der der Anteil des Prozessgases sinkt und der Anteil des Synthesegas-Zwischenprodukts oder je nach Ausbildung des Sauerstoffseparators auch des Synthesegases ansteigt.

Das erhaltene Synthesegas lässt sich dann nach einer weiteren Behandlung, beispielsweise einer Reinigung, in einen Alkohol, insbesondere in Methanol umwandeln. Dabei lässt sich stöchiometrisch das Methanol (CH3OH) darstellen als C + H2O + H2.

In energetischer Betrachtung wird die stoffliche Energie des Methanols etwa zu zwei Dritteln aus der stofflichen Energie des Organiksubstrats und zu etwa einem Drittel aus der elektrischen Energie für die Erzeugung des Plasmas bereitgestellt.

Nach einer vorteilhaften Weiterbildung ist die Vorrichtung zur Herstellung eines Alkohol-Synthesegases dadurch gekennzeichnet, dass der Plasmaerzeuger eine Mehrzahl längserstreckter und vertikal angeordneter Plasmaelektroden aufweist.

Vorzugsweise sind die Plasmaelektroden stabförmig ausgebildet und in dem Reaktionsraum in die 3-Phasen-Dispersion im Bereich der Blasensäule senkrecht eingetaucht. Die Plasmaelektroden können dabei vorzugsweise als Rundstäbe ausgebildet und parallel angeordnet sein. Vorteilhaft wird so eine Plasmabildung über einen weiten Bereich der Blasensäule räumlich verteilt erreicht. Damit wird zugleich eine geringe Plasmakonzentration und gute Plasmaverteilung erreicht. Es wurde überraschend gefunden, dass so eine unerwünschte schnelle Reaktion der Sauerstoffkomponente des Synthesegas-Zwischenprodukts unterdrückt werden kann.

Gemäß einer hierauf aufbauenden weiteren Verbesserung ist die Vorrichtung zur Herstellung eines Alkohol-Synthesegases dadurch gekennzeichnet, dass die Anoden und Kathoden in einem Horizontalschnitt schachbrettartig zueinander angeordnet sind.

Als schachbrettartige Anordnung ist hierbei zu verstehen, dass sowohl in einer Zeile als auch in einer Reihe sich Anoden und Kathoden jeweils abwechseln. Hierdurch wird eine besonders effektive Plasmabildung sowie zugleich deren weitgehend homogene Verteilung über die Plasmaelektrodenoberfläche bereitgestellt.

Entsprechend einer weiteren vorteilhaften Weiterbildung ist die Vorrichtung zur Herstellung eines Alkohol-Synthesegases dadurch gekennzeichnet, dass der Sauerstoffseparator als mindestens ein längserstrecktes und vertikal angeordnetes Keramiktauchrohr ausgebildet und in der Blasensäule angeordnet ist.

Gemäß dieser Ausbildung ist die Oberfläche des Sauerstoffseparators vorteilhaft längs in der Blasensäule verteilt. Hierdurch wird vorteilhaft eine räumlich verteilte Sauerstoffabtrennung aus dem Synthesegas-Zwischenprodukt ermöglicht.

Gemäß einer nächsten vorteilhaften Weiterbildung ist die Vorrichtung zur Herstellung eines Alkohol-Synthesegases dadurch gekennzeichnet, dass die Plasmaelektroden und das Keramiktauchrohr im Wesentlichen parallel zueinander angeordnet sind.

Nach dieser Weiterbildung liegt eine besonders vorteilhafte Kombination aus einer räumlich verteilten Plasmaerzeugung mit einer räumlich verteilten Sauerstoffabtrennung vor. Hiermit wird die Sauerstoffkomponente des Synthesegas-Zwischenprodukts entstehungsnah abgetrennt und es wird auf diese Weise wirksam einer unerwünschten Reaktion mit anderen Komponenten der 3-Phasen-Dispersion, insbesondere des Synthesegas-Zwischenprodukts, entgegengewirkt.

Nach einem weiteren Aspekt der Erfindung betrifft diese ein Verfahren zur Herstellung eines solchen Alkohol-Synthesegases.

Das Alkohol-Synthesegas wird auch bezogen auf das Verfahren nachfolgend als Synthesegas bezeichnet und weist insbesondere Wasserstoff und Kohlenmonoxid auf.

Die Definitionen und Beschreibungsinhalte zu der Vorrichtung zur Herstellung des Alkohol-Synthesegases gelten in entsprechender Weise nachfolgend auch in Bezug auf das Verfahren zur Herstellung des Alkohol-Synthesegases.

Das Verfahren wird mittels des Reaktorbehältnisses, des Plasmaerzeugers und des Sauerstoffseparators durchgeführt, wobei diese Grundkomponenten nach einem der Ansprüche 1 bis 5 ausgebildet sind.

Das Verfahren weist folgende Verfahrensschritte auf:
a) Bereitstellen des Organiksubstrats und des Wassers als Ausgangsstoffe und Zuführen mittels der Organiksubstrat-Wasser-Zuleitung in den Reaktionsraum,
b) Bereitstellen des Prozessgases als weiteren Ausgangsstoff und Zuführen mittels der Begasungseinrichtung in den Reaktionsraum,
c) Erzeugen der Blasensäule mittels der Begasungseinrichtung unter Ausbildung einer 3-Phasen-Dispersion aus dem Organiksubstrat, dem Wasser und dem Prozessgas,
d) Erzeugen des Plasmas mittels des Plasmaerzeugers in der Blasensäule und Ausbilden des Synthesegas-Zwischenprodukts,
e) Abtrennen von Sauerstoff aus dem Synthesegas-Zwischenprodukt mittels des Sauerstoffseparators und Erhalten des Synthesegases.

In dem Verfahrensschritt a) werden das Organiksubstrat und das Wasser bereitgestellt und in den Reaktionsraum eingeleitet. Vorzugsweise werden das Organik-substrat und das Wasser als feine Suspension zubereitet und die Suspension eingeleitet, so dass in dem Reaktionsraum eine prozessfertige Suspension vorliegt.

Zudem wird im Verfahrensschritt b) das Prozessgas bereitgestellt und über die Begasungsvorrichtung in den Reaktionsraum eingeleitet.

In dem Verfahrensschritt c) wird erfindungsgemäß mittels des Prozessgases eine Blasensäule erzeugt und eine Verteilung des Prozessgases in der Organiksubstrat-Wasser-Suspension erzeugt, womit eine feindisperse 3-Phasen-Dispersion aus dem Organiksubstrat, dem Wasser und dem Prozessgas bereitgestellt wird.

Gemäß Verfahrensschritt d) wird mittels des Plasmaerzeugers in der Blasensäule ein Plasma erzeugt und so das Synthesegas-Zwischenprodukt gebildet. Hierbei werden an den Plasmaelektroden unter Zuführung von elektrischer Energie die chemischen Bindungen insbesondere des Organiksubstrats ganz oder teilweise aufgetrennt und somit das Synthesegas-Zwischenprodukt, das einen hohen Anteil an Sauerstoff aufweist, gebildet. Vorzugsweise sind die Plasmaelektroden als vertikale Stäbe in der Blasensäule angeordnet, so dass über einen großen Bereich verteilt in der Blasensäule das Plasma gebildet und von der Strömung der Blasensäule zügig von den Plasmaelektroden fortgetragen wird und in die 3-Phasen-Dispersion eingeht.

Nach Verfahrensschritt e) wird letztlich die Sauerstoffkomponente des Synthesegas-Zwischenprodukts mittels des Sauerstoffseparators zumindest teilweise entzogen.

Im Ergebnis des Verfahrens wird das Synthesegas erhalten, das dann zur weiteren Verarbeitung, insbesondere zur Bildung eines Alkohols, zur Verfügung steht.

Nach einer vorteilhaften Weiterbildung des Verfahrens ist dieses dadurch gekennzeichnet, dass in dem Verfahrensschritt e) ein entlang der Blasensäule verteiltes Abtrennen von Sauerstoff mittels eines Keramiktauchrohrs, das längsersteckt ausgebildet und vertikal in der Blasensäule angeordnet ist, durchgeführt und mittels der Entnahmeleitung das Synthesegas entnommen wird.

Vorteilhaft wird nach dieser Weiterbildung der Sauerstoff entstehungsnah abgetrennt, so dass dieser zugleich zeitnah entnommen und dessen unerwünschte Reaktion weitgehend verhindert wird. Vorteilhaft kann gemäß dieser Weise die Zusammensetzung des Synthesegases vorteilhaft beeinflusst werden. Da nach dieser Weiterbildung bereits innerhalb der 3-Phasen-Dispersion in dem Reaktionsbehältnis das Synthesegas-Zwischenprodukt zu dem Synthesegas umgewandelt wird, erfolgt über die Entnahmeleitung die Entnahme als Synthesegas.

Die Erfindung wird als Ausführungsbeispiel anhand von
- Fig. 1: Schematische Seitenansicht als Vertikalschnitt
- Fig. 2: Horizontalschnitt mit Darstellung der Plasmaelektroden
- Fig. 3: Horizontalschnitt mit zusätzlicher Darstellung der Keramiktauchrohre näher erläutert.

Hierbei beziehen sich gleiche Bezugszeichen in den verschiedenen Figuren auf jeweils gleiche Merkmale oder Bauteile. Die Bezugszeichen werden in der Beschreibung auch dann verwandt, sofern sie in der betreffenden Figur nicht dargestellt sind.

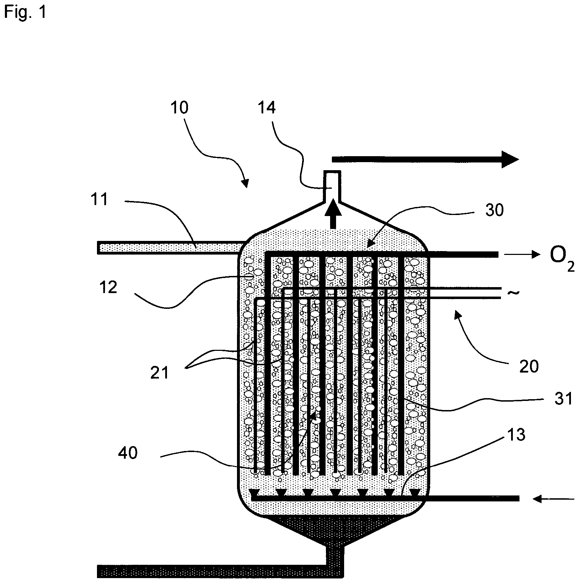

Fig. 1 zeigt den Aufbau einer Vorrichtung zur Herstellung eines Alkohol-Synthesegases in einem Ausführungsbeispiel.

Das Reaktorbehältnis 10 ist in dem Ausführungsbeispiel als stehend angeordneter Behälter von im Wesentlichen zylindrischer Bauform ausgebildet.

Seitlich führt die Origaniksubstrat-Wasser-Zuleitung 11 in den Reaktionsraum 12. Über diese Zuleitung 11 wird die Organiksubstrat-Wasser-Suspension zugeführt, die dann den Reaktionsraum 12 im Wesentlichen ausfüllt.

Im unteren Abschnitt des Reaktionsraums 12 sind die Austrittsdüsen der Begasungseinrichtung 13 angeordnet, über die das Prozessgas eingeleitet wird. Die Zuführung des Prozessgases ist schematisch durch den horizontalen Pfeil von rechts nach links dargestellt. Das zugeleitete Prozessgas steigt in der Organik-substrat-Wasser-Suspension in kleinen Bläschen auf und erzeugt so die Blasensäule 40. Durch die Feinverteilung der Bläschen in der Organiksubstrat-Wasser-Suspension bildet sich die 3-Phasen-Dispersion aus dem Organiksubstrat als fester Phase, dem Wasser als flüssiger Phase und dem Prozessgas als gasförmiger Phase aus.

Weiterhin ist der Plasmaerzeuger 20 dargestellt, dessen Plasmaelektroden 21 als vertikal angeordnete Stabelektroden in der Blasensäule 40 angeordnet sind. Mit den Plasmaelektroden wird somit in der Blasensäule das Plasma und somit das Synthesegas-Zwischenprodukt erzeugt, das in den Bläschen in der Blasensäule 40 aufsteigt.

Der Sauerstoffseparator 30 weist mehrere Keramiktauchrohre 31 auf, die im Ausführungsbeispiel parallel zu den Plasmaelektroden ebenfalls in der Blasensäule angeordnet sind. Das Synthesegas-Zwischenprodukt kommt auf diese Weise unmittelbar nach seiner Erzeugung mit den Keramiktauchrohren 31 in Berührung, wo ein hoher Anteil des Sauerstoffs abgetrennt und ausgeleitet wird. Die Ausleitung des Sauerstoffs ist durch den horizontalen Pfeil von links nach rechts und die Bezeichnung O2 dargestellt.

Nach Abtrennung des Sauerstoffs liegt das in den Bläschen in der Blasensäule 40 weiter aufsteigende Synthesegas vor, welches über die Entnahmeleitung 14 aus dem Reaktionsraum 12 ausgeleitet wird. Dies wird durch den senkrechten nach oben zeigenden Pfeil in dem Reaktionsraum 12 und den sich an das Ende der Entnahmeleitung 14 anschließenden horizontalen nach rechts zeigenden Pfeil, beide in Fettdruck, dargestellt.

Das Synthesegas kann dann weiterbehandelt werden, was jedoch nicht Bestandteil der erfindungsgemäßen Vorrichtung und des erfindungsgemäßen Verfahrens ist.

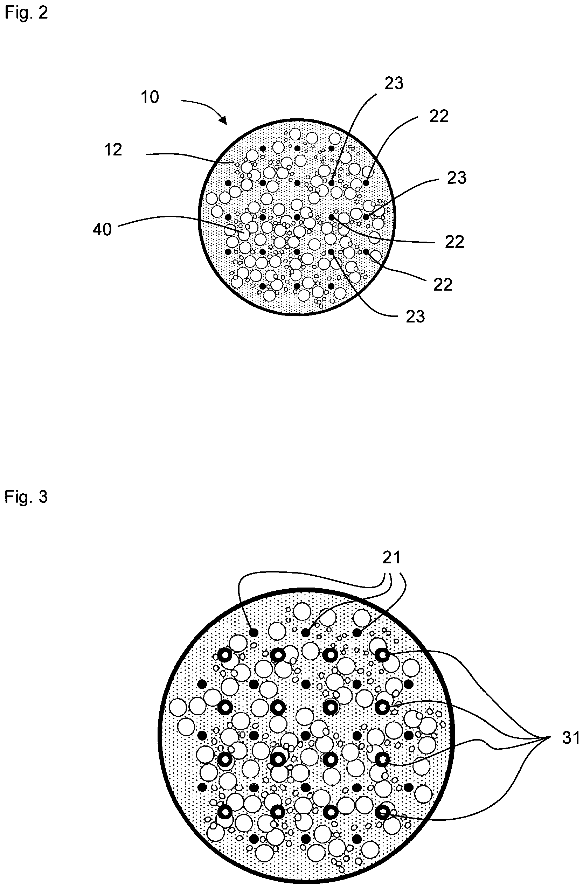

Fig. 2 zeigt in einem Horizontalschnitt zunächst ausschließlich die Anordnung der Plasmaelektroden 21 in dem Reaktionsraum 12 des Reaktorbehältnisses 10. Sie sind in der Blasensäule 4 angeordnet, wobei sich die Anoden 21 und die Kathoden 22 in jeder Zeile und jeder Reihe abwechseln und so eine schachbrettartige Anordnung ausbilden.

Fig. 3 zeigt zusätzlich zu Fig. 2 auch die Anordnung der Keramiktauchrohre 31. Sie sind jeweils in den von den Plasmaelektroden 21 aufgespannten Zwischenräumen in einem diagonalen Versatz angeordnet und befinden sich aufgrund der Anordnung der Polaritäten der Plasmaelektroden in einer elektrisch neutralen Zone.

Aus Gründen der Übersichtlichkeit weisen nur einige der Keramiktauchrohre 31 und einige der Plasmaelektroden 21 Bezugszeichen auf.

### Verwendete Bezugszeichen

- 10: Reaktorbehältnis
- 11: Organiksubstrat-Wasser-Zuleitung
- 12: Reaktionsraum
- 13: Begasungsvorrichtung
- 14: Entnahmeleitung
- 20: Plasmaerzeuger
- 21: Plasmaelektroden
- 22: Anode
- 23: Kathode
- 30: Sauerstoffseparator
- 40: Blasensäule

## Patentansprüche

1. Vorrichtung zur Herstellung eines Alkohol-Synthesegases,
ausgebildet zur Erzeugung eines Synthesegases, aufweisend Wasserstoff und Kohlenstoffmonoxid,
aufweisend ein Reaktorbehältnis (1), einen Plasmaerzeuger (2) und einen Sauerstoffseparator (3),
wobei das Reaktorbehältnis (1) ausgebildet ist als ein Blasensäulenreaktor, aufweisend
eine Organiksubstrat-Wasser-Zuleitung (11),
einen Reaktionsraum (12) der ausgebildet ist zu einer Aufnahme einer Organiksubstrat-Wasser-Suspension,
eine Begasungsvorrichtung (13), die ausgebildet ist zu einer Zuführung und dispersen Verteilung eines Prozessgases in der Organiksubstrat-Wasser-Suspension unter Erzeugung einer 3-Phasen-Dispersion, diese aufweisend eine feste, flüssige und gasförmige Phase, die feste Phase aufweisend das Organiksubstrat, die flüssige Phase aufweisend das Wasser und die gasförmige Phase aufweisend das Prozessgas, mittels Erzeugung einer Blasensäule (4),
eine Entnahmeleitung (14), die ausgebildet ist zu einer Entnahme des Synthesegases oder eines Synthesegas-Zwischenprodukts,
wobei der Plasmaerzeuger (2) in der Blasensäule (4) angeordnet ist,
dieser aufweisend Plasmaelektroden (21), wobei diese als Anoden (22) und Kathoden (23) vorliegen, wobei die Plasmaelektroden (21) ausgebildet sind zur Erzeugung eines Plasmas unter Entstehung des Synthesegas-Zwischenprodukts
und wobei der Sauerstoffseparator (3) ausgebildet ist zu einer Abtrennung von Sauerstoff aus dem Synthesegas-Zwischenprodukt unter Erhalt des Synthesegases.

2. Vorrichtung zur Herstellung eines Alkohol-Synthesegases nach Anspruch 1, **dadurch gekennzeichnet,**
**dass** der Plasmaerzeuger (2) eine Mehrzahl längserstreckter und vertikal angeordneter Plasmaelektroden (21) aufweist.

3. Vorrichtung zur Herstellung eines Alkohol-Synthesegases nach dem vorhergehenden Anspruch 2,
**dadurch gekennzeichnet,**
**dass** die Anoden (22) und Kathoden (23) der Plasmaelektroden (21) in einem Horizontalschnitt schachbrettartig zueinander angeordnet sind.

4. Vorrichtung zur Herstellung eines Alkohol-Synthesegases nach einem der vorhergehenden Ansprüche,
**dadurch gekennzeichnet,**
**dass** der Sauerstoffseparator (3) als mindestens ein längserstrecktes und vertikal angeordnetes Keramiktauchrohr (31) ausgebildet und in der Blasensäule (4) angeordnet ist.

5. Vorrichtung zur Herstellung eines Alkohol-Synthesegases nach dem vorhergehenden Anspruch 4,
**dadurch gekennzeichnet,**
**dass** die Plasmaelektroden (21) und das Keramiktauchrohr (31) im Wesentlichen parallel zueinander angeordnet sind.

6. Verfahren zur Herstellung eines Alkohol-Synthesegases,
wobei das Synthesegas Wasserstoff und Kohlenmonoxid aufweist, mittels des Reaktorbehältnisses (1), des Plasmaerzeugers (2) und des Sauerstoffseparators (3) nach einem der Ansprüche 1 bis 5,
aufweisend folgende Verfahrensschritte:
a) Bereitstellen des Organiksubstrats und des Wassers als Ausgangsstoffe und Zuführen mittels der Organiksubstrat-Wasser-Zuleitung (11) in den Reaktionsraum (12),
b) Bereitstellen des Prozessgases als weiteren Ausgangsstoff und Zuführen mittels der Begasungseinrichtung (13) in den Reaktionsraum (12),
c) Erzeugen der Blasensäule (4) mittels der Begasungseinrichtung (13) unter Ausbildung einer 3-Phasen-Dispersion aus dem Organiksubstrat, dem Wasser und dem Prozessgas,
d) Erzeugen des Plasmas mittels des Plasmaerzeugers (2) in der Blasensäule und Ausbilden des Synthesegas-Zwischenprodukts,
e) Abtrennen von Sauerstoff aus dem Synthesegas-Zwischenprodukt mittels des Sauerstoffseparators (3) und Erhalten des Synthesegases.

7. Verfahren zur Herstellung eines Alkohol-Synthesegases,
**dadurch gekennzeichnet,**
**dass** in dem Verfahrensschritt e) ein entlang der Blasensäule verteiltes Abtrennen von Sauerstoff mittels eines Keramiktauchrohrs (31), das längsersteckt ausgebildet und vertikal in der Blasensäule angeordnet ist, durchgeführt und mittels der Entnahmeleitung (14) das Synthesegas entnommen wird.

## Claims

1. A device for producing an alcohol synthesis gas,
designed to produce a synthesis gas, comprising hydrogen and carbon monoxide,
comprising a reactor vessel (1), a plasma generator (2) and an oxygen separator (3),
wherein the reactor vessel (1) is designed as a bubble column reactor, comprising
an organic-substrate-water supply line (11),
a reaction chamber (12) which is designed to receive an organic-substrate-water suspension,
a gassing system (13) which is designed to supply and disperse a process gas in the organic-substrate-water suspension to produce a three-phase dispersion by means of generating a bubble column (4), the dispersion comprising a solid, a liquid and a gaseous phase, the solid phase comprising the organic substrate, the liquid phase comprising the water and the gaseous phase comprising the process gas,
a discharge line (14) designed to discharge the synthesis gas or a synthesis gas intermediate product,
wherein the plasma generator (2) is arranged in the bubble column (4) and comprises plasma electrodes (21), wherein these are provided as anodes (22) and cathodes (23), wherein the plasma electrodes (21) are designed to generate a plasma with the production of the synthesis gas intermediate product,
and wherein the oxygen separator (3) is designed to separate oxygen from the synthesis gas intermediate product to obtain the synthesis gas.

2. The device for producing an alcohol synthesis gas according to claim 1, **characterized in**
**that** the plasma generator (2) comprises a plurality of longitudinally extended and vertically arranged plasma electrodes (21).

3. The device for producing an alcohol synthesis gas according to the previous claim 2,
**characterized in**
**that** the anodes (22) and cathodes (23) of the plasma electrodes (21) are arranged in a chessboard pattem in a horizontal section.

4. The device for producing an alcohol synthesis gas according to one of the previous claims,
**characterized in**
**that** the oxygen separator (3) is designed as at least one longitudinally extended and vertically arranged ceramic immersion tube (31) and is arranged in the bubble column (4).

5. The device for producing an alcohol synthesis gas according to the previous claim 4,
**characterized in**
**that** the plasma electrodes (21) and the ceramic immersion tube (31) are arranged substantially parallel to each another.

6. A method for producing an alcohol synthesis gas
by means of the reactor vessel (1), the plasma generator (2) and the oxygen separator (3) according to one of claims 1 to 5,
wherein the synthesis gas comprises hydrogen and carbon monoxide,
the method comprising the following procedural steps:
a) providing the organic substrate and the water as starting materials and supplying them into the reaction chamber (12) via the organic-substrate-water supply line (11),
b) providing the process gas as a further starting material and supplying it into the reaction chamber (12) by means of the gassing system (13),
c) generating the bubble column (4) by means of the gassing system (13) under the formation of a three-phase dispersion from the organic substrate, the water and the process gas,
d) generating the plasma by means of the plasma generator (2) in the bubble column and producing the synthesis gas intermediate product,
e) separating oxygen from the synthesis gas intermediate product by means of the oxygen separator (3) and obtaining the synthesis gas.

7. The method for producing an alcohol synthesis gas,
**characterized in**
**that**, in the process step e), a separation of oxygen in a distributed manner along the bubble column is carried out by means of a ceramic immersion tube (31), which has a longitudinally extended design and is arranged vertically in the bubble column, and the synthesis gas is discharged via the discharge line (14).

## Revendications

1. Dispositif de production d'un gaz de synthèse d'alcool,
conçu pour produire un gaz de synthèse comprenant de l'hydrogène et du monoxyde de carbone,
comprenant un conteneur de réacteur (1), un générateur de plasma (2) et un séparateur d'oxygène (3),
où le conteneur de réacteur (1) est conçue comme un réacteur à colonne à bulles, comprenant
une conduite d'alimentation en eau de substrat organique (11),
un espace de réaction (12) qui est conçu pour recevoir une suspension substrat organique-eau
un dispositif de gazage (13), qui est conçu pour fournir et disperser un gaz de traitement dans la suspension substrat organique-eau pour produire une dispersion à trois phases, comprenant une phase solide, liquide et gazeuse, la phase solide comprenant le substrat organique, le phase liquide comprenant l'eau et phase gazeuse comprenant le gaz de traitement, en générant une colonne à bulles (4),
une conduite d'évacuation (14) qui est conçue pour éliminer le gaz de synthèse ou un produit intermédiaire de gaz de synthèse,
dans lequel le générateur de plasma (2) est disposé dans la colonne à bulles (4),
qui présente des électrodes à plasma (21), celles-ci étant présentes sous forme d'anodes (22) et de cathodes (23), les électrodes à plasma (21) étant conçues pour générer un plasma de l'intermédiaire du gaz de synthèse et dans lequel le séparateur d'oxygène (3) est conçu pour séparer l'oxygène du gaz de synthèse intermédiaire tout en obtenant le gaz de synthèse.

2. Dispositif de production d'un gaz de synthèse d'alcool selon la revendication 1
est **caractérisé en ce**
**que** le générateur de plasma (2) comporte une pluralité d'électrodes à plasma (21) allongées et disposées verticalement.

3. Dispositif de production d'un gaz de synthèse d'alcool selon la revendication précédente 2
est **caractérisé en ce**
**que** les anodes (22) et les cathodes (23) des électrodes à plasma (21) sont disposées en forme de damier les unes par rapport aux autres dans une section horizontale.

4. Dispositif de production d'un gaz de synthèse d'alcool selon l'une des revendications précédentes
est **caractérisé en ce**
**que** le séparateur d'oxygène (3) est réalisé sous la forme d'au moins un tube plongeur en céramique (31) allongé et disposé verticalement et est disposé dans la colonne à bulles (4).

5. Dispositif de production d'un gaz de synthèse d'alcool selon la revendication précédente 4
est caractérisé en ce
les électrodes à plasma (21) et le tube plongeur en céramique (31) sont disposés essentiellement parallèlement les uns aux autres.

6. Procédé de production d'un gaz de synthèse d'alcool,
dans lequel le gaz de synthèse contient de l'hydrogène et du monoxyde de carbone,
au moyen du conteneur de réacteur (1), du générateur de plasma (2) et du séparateur d'oxygène (3) selon l'une des revendications 1 à 5,
comprenant les suivantes étapes de procédé:
a) fournir le substrat organique et l'eau comme matières premières et les introduire dans l'espace de réaction (12) à l'aide de la conduite d'alimentation en eau et substrat organique (11),
b) fournir le gaz de traitement comme autre matière première et l'introduire dans l'espace de réaction (12) à l'aide du dispositif de gazage (13),
c) générer la colonne à bulles (4) au moyen du dispositif de gazage (13) pour former une dispersion triphasée à partir du substrat organique, de l'eau et du gaz de traitement,
d) générer le plasma au moyen du générateur de plasma (2) dans la colonne à bulles et former le gaz de synthèse intermédiaire,
e) séparer l'oxygène du gaz de synthèse intermédiaire au moyen du séparateur d'oxygène (3) et obtenir le gaz de synthèse.

7. Procédé de production d'un gaz de synthèse d'alcool,
est **caractérisé en ce**
**que** dans l'étape de procédé, l'oxygène est séparé le long de la colonne à bulles au moyen d'un tube plongeur en céramique (31) qui est longitudinal et disposé verticalement dans la colonne à bulles, et le gaz de synthèse est éliminé par la conduite d'évacuation (14).
